# EUROPEAN PATENT SPECIFICATION

(11) **EP 0 438 211 B1**
(45) Date of publication and mention of the grant of the patent: **09.12.1998**
(21) Application number: 91300077.4
(22) Date of filing: 04.01.1991
(51) Int. Cl.: G06F 12/08

(54) **Cache memory system**
Cache-Speicheranordnung
Système d'antémémoire

(30) Priority: 16.01.1990 JP 4668/90
(43) Date of publication of application: 24.07.1991
(73) Proprietor: International Business Machines Corporation, Armonk, N.Y. 10504 (US)
(72) Inventor: Shimizu, Shigenori, Asao-kum Kawasaki-shi, Kanagawa-ken (JP); Ohara, Moriyoshi, Setagaya-ku, Tokyo-to (JP)
(74) Representative: Burt, Roger James, Dr.

(56) References cited:
- EP-A- 0 343 567
- COMPUTER ARCHITECTURE CONFERENCE PROCEEDINGS. vol. 17, no. 3, June 1989, WASHINGTON,US pages 2 - 15; EGGERS ET AL.: 'Evaluating the performance of four snooping cache coherency protocols'
- PROCEEDINGS OF THE IEEE. vol. 63, no. 6, June 1975, NEW YORK US pages 924 - 939; DENNING ET AL.: 'Multiprogrammed memory management'

## Description

The invention relates to a cache memory system for a multiprocessor system, in particular, for a multiprocessor system adopting a so-called snoopy cache architecture wherein each private cache system is provided with a controller which monitors signals on the shared bus and manipulates data in the private cache, for example, for maintaining data consistency among the private caches.

Tightly coupled multiprocessor systems having a plurality of processors with private caches, which processors are connected to one another through a shared bus, are starting to be used in practical applications.

In such a multiprocessor system a plurality of processors read from or write to the shared memory connected to the shared bus. Without private caches, each processor has to read/write access the shared memory through the shared bus. Therefore the shared memory is very frequently occupied and the increase of the number of processors does not improve the performance beyond a certain limitation.

An approach has been accordingly proposed wherein each processor has a private cache, keeps in the cache a partial copy of data stored in the shared memory, and performs read/write access to the data within the cache, and thereby the shared bus and memory are not used very frequently ( A multi-cache system). That approach however causes the problem that when each processor modifies shared data in its cache without relation to the other one or more sharing processors, the sharing processors may have different data at a given address at a particular time. A means for keeping data at a given address in different caches the same is accordingly needed. Hereinafter, the term "the consistency of data" will be used to refer to every processor accessing the same data at a given address.

One method for ensuring data consistency is the snoopy cache technique. The snoopy cache technique maintains data consistency among caches by monitoring the shared bus with cache controllers of processors. That is, when a processor modifies data in its cache, it sends information about how it is modifying the data and what address the modified data is at, on the shared bus. If another one or more processors share that data, the cache controllers of the other processors see that information and update or invalidate the data in their caches to maintain data consistency.

Conventional snoopy cache techniques each adopt either a first protocol wherein upon modification of shared data at a cache, copies at the other caches are invalidated, or otherwise a second protocol wherein the copies are modified. For example, Dragon of the Xerox Corporation, the United States of America, and FireFly of the Digital Equipment Corporation, the United States of America use the update protocol, and on the other hand, SPUR of the University of California uses the invalidate protocol. In addition to the above, TOP-1 developed by Tokyo Research Laboratory, IBM Japan Ltd., is designed to selectively switch between the update and invalidate protocols with implementation in software. The document COMPUTER ARCHITECTURE CONFERENCE PROCEEDINGS, vol 17, n° 3, june 1989, pages 10-11, describes a simulation model with switching between write-broadcast and write-invalidable protocols.

The above two types of protocol can maintain the consistency of data equally well among a plurality of caches, that is, the updating and invalidating of data have the same effect in respect of data consistency. However they both have advantages and disadvantages in accordance with their approaches.

The update type, firstly, is suitable for cases where data tightly shared by processors (or where the processors almost equally access shared data) is manipulated. The invalidate type is not suitable for those cases, because each time a processor modifies a shared data area the copies in the caches of the other sharing processors are invalidated, and thereby a read/write access to that area by the other sharing processors inevitably causes a cache miss and requires access to the shared bus. In this regard, the copies in the sharing caches are accordingly updated, thereby enabling the data area to be read without accessing to the shared bus. Generally speaking, the update type works well when using for buffers used the parallel program of the producer and consumer model, and semaphore or the like used to synchronize processors, etc.

The invalidate type, on the other hand, is preferably applied to shared data which is exclusively used by one processor or shared data to which access is not made frequently by the other processors. Paging of process migration may make data exclusively held by one processor as shared while it should be kept as exclusive, which situation places unnecessary shared data in the system and degrades the performance. The invalidate type is effective in that situation.

The preference between the above types cannot be accordingly decided in a straightforward manner and depends on the characteristics of a program to be executed and the operational statuses of individual processors. The prior art does not provide a protocol enabling efficient operations in every data access situation.

The above mentioned Dragon, FireFly and SPUR each provides only one type, and consequently performance is degraded in some situations. TOP-1 can selectively switch between the above mentioned types by means of software, which still does not resolve the problem of how and when to switch. It depends on resolution to that problem whether or not the performance is fully enhanced.

According to the present invention there is provided cache memory system for interconnecting a processor and a shared bus in a multiprocessor data processing system comprising a plurality of processors connected to the shared bus via similar cache memory systems;
the cache memory system comprising:
- storage means (4) for storing shared data arranged in storage blocks; some of said storage blocks being a 'working set' for frequent access by said processor;
- a controller (3) for monitoring signals on the shared bus and, when a piece of shared data is modified in another cache memory system for performing one of two data consistency procedures for the piece of shared data;
characterised by:
- means for determining (5) whether or not the address of a piece of shared data stored in the storage means corresponds to the address of a storage block within the working set when a data consistency procedure is to be performed for the piece of shared data, the controller being responsive to the means for determining; and
means for performing said controller comprising one of the two data consistency procedures depending upon the result of the means for determining.

Preferably the means for determining comprises:
- means for storing addresses of storage blocks belonging to the working set;
- means for determination whethe or not the address of the storage block to which the piece of shared data belongs and for which one of the two data consistency procedures is to be performed, matches any of the addresses stored in the address storage means.

In a preferred form of the invention, when the processor accesses data in a storage block not belonging to the working set, the storage block is caused to be added to the working set, and when the processor does not access data in a given storage block belonging to the working set while the processor accesses data in other storage blocks a predetermined number of times, the given storage block is caused to be deleted from the working set.

The data consistency procedures can comprise an invalidate type procedure wherein, when a piece of shared data is modified in the storage means, the status of the shared piece of data is changed to an exclusive status and the shared piece of data stored in the storage means of other cache memory systems in the multiprocessor data processing system is caused to be invalidated, and an update type procedure wherein, when a piece of shared data is modified, the piece of shared data stored in the storage means of other cache memory systems in the multiprocessor data processing system is caused to be updated accordingly and, if no other cache memory system has the piece of shared data stored therein, its status is changed to an exclusive status. On determination that the piece of shared data does not belong to the working set the controller performs a data consistency procedure of an invalidate type and on determination that the piece of shared data does belong to the working set the controller performs a data consistency procedure of an update type.

The present invention enables a mechanism to be provided enabling dynamically and most favorably to switch between the protocols of the invalidate and update types. This mechanism enables traffic on the shared bus to be reduced and the system performance to be improved.

The invention further enables cache control to be provided wherein the above mechanism is utilized with introduction of a new cache protocol to reduce traffic in the shared bus.

Usually each processor accesses repeatedly a limited area of the memory in a given short period of time. That area is referred to as the "working set" in respect of that processor. According to the present invention, each time a write operation occurs to shared data, a determination as to whether or not the data belongs to the working set is made for each of the sharing processors, and if it is determined as belonging to the respective working set then the cache consistency is maintained by the update type of procedure, and otherwise by the invalidate type of procedure. Data within the working set is data that is used by the processor with a high probability. The processor can access the newest data without using the bus, by updating data within the working set. In contrast, data out of the working set has a low probability of being accessed by the processor. Nevertheless this data is required to be updated each time another processor accesses the data if the data still exists in the cache (update type). The invention therefore reduces bus traffic for unnecessary updating by invalidating data out of the working set.

Further, this invention improves the system performance by utilizing the above mechanism for determining the working set, with a new cache protocol, which will be referred to as ALL_READ. A plurality of processors in a multiprocessor system using snoopy caches frequently share data or a code at one address. In this case, conventional snoopy cache protocols require the processor individually to use the bus to load the data or code into their caches. Although it achieves much improved system performance if when a processor causes a read miss for data or a code at an address, another one or more processors likely to use the data or code automatically read it into their caches, the other one or more caches in the conventional systems can not predict the use of the data or code in advance, and thereby the conventional systems cannot perform the broadcasting of read data efficiently. According to this invention, by using the working set determination mechanism, data only in the working set is applied with ALL_READ. This invention thereby provides ALL_READ efficiently, and reduces bus traffic and improves the system performance.

The invention enables a multiprocessor data processing system to be provided comprising a plurality of processors; a shared bus and a plurality of cache memory systems as described above, each processor being connected to the shared bus via one of the cache memory systems.

An embodiment of the invention will now be described by way of example with reference to the accompanying drawings, wherein:
Figure 1 is a block diagram illustrating the overall configuration of one embodiment of this invention;
Figure 2 is a block diagram illustrating the configuration of the private cache used in the embodiment of Figure 1;
Figure 3 is a diagram illustrating the configuration of the cache basic controller in Figure 2;
Figure 4 is a block diagram illustrating the mode switching controller in Figure 2;
and Figures 5 through 7 are diagrams illustrating the applications of the embodiment.

### 1. Configuration

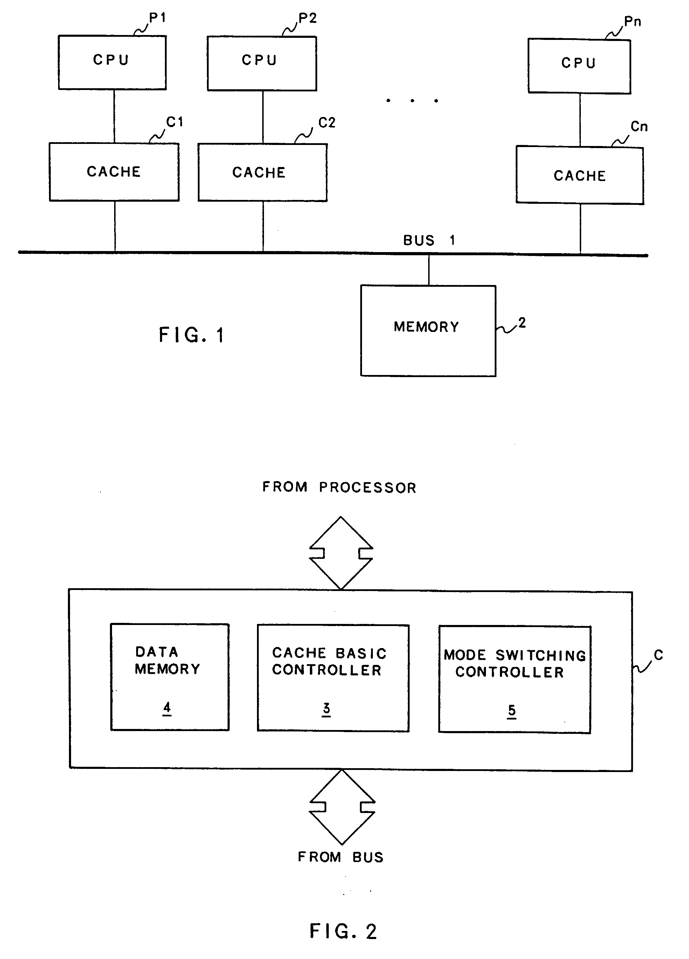

Figure 1 shows the overall configuration of the multiprocessor system of the embodiment, wherein a plurality of processors P1, P2,..Pn are connected to a shared bus 1 and shared memory 2 via respective caches C1, C2,..Cn. The caches C1, C2,..Cn enable the processors P1, P2,..Pn to perform memory access more rapidly on average and have means for maintaining the consistency among the caches C1, C2,..Cn.

Each of the caches C is configured as shown in Figure 2, wherein a cache basic controller 3 performs such basic control of the whole of the cache C, required when the cache C is accessed by the processor P, and when snooping the bus 1. A cache data memory 4 is a high speed memory for storing a partial copy of data stored at the main memory (the shared memory 2). The processor P can read / write required data via the data memory 4 at most times without accessing the main memory ( the data is accessed 4 bytes by 4 bytes ). Therefore the processor P can perform more rapid memory access on average. A mode switching controller 5 switches the modes of the cache C so as to have the cache basic controller 3 efficiently maintain the consistency among this cache and other caches, by monitoring the memory access by the processor and the memory access on the bus 1.

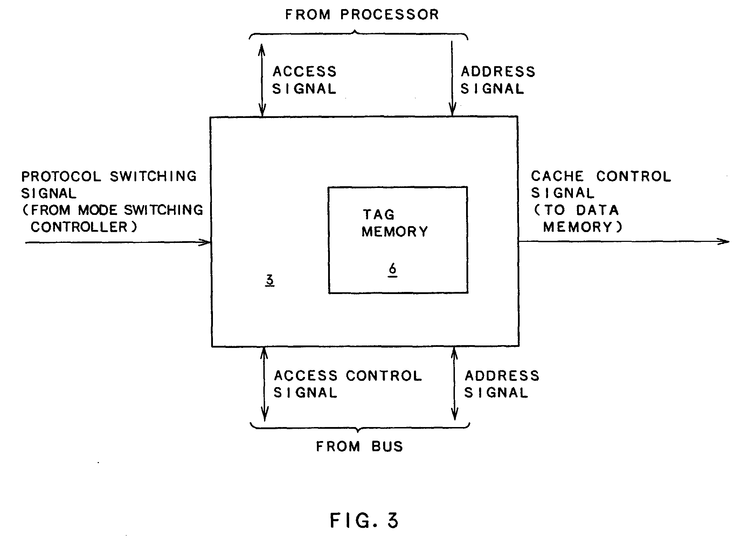

Figure 3 shows the cache basic controller 3, wherein the controller 3 receives as inputs access control signals and address signals both from the processor P and the bus 1. The cache basic controller 3 has a tag memory 6 for storing main memory addresses at which the cache C has copies of data. When the processor P accesses the cache or snooping operations are performed, the controller 3 checks whether or not addressed data is in the cache and performs required control for the cache.

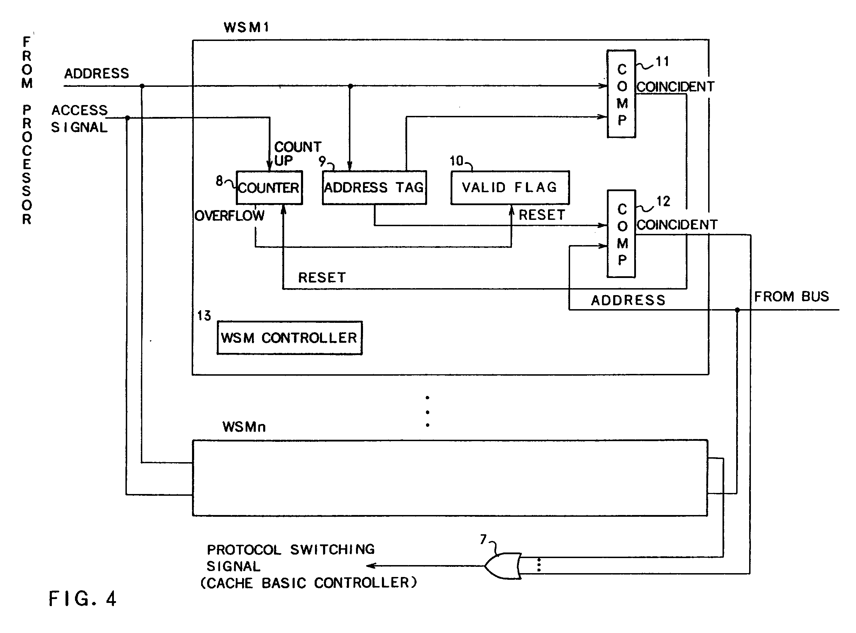

Figure 4 shows the mode switching controller 5, which consists of n working set memories ( hereinafter denoted by WSM1, WSM2,.., WSMn, individually and WSM in general) and an n-input OR circuit 7. WSM consists of a counter 8, an address tag 9, a valid flag 10, two comparators 11, and 12, and a control circuit 13 which controls WSM. In each WSM one storage block ( for example 4 k byte size) included in the working set is registered. The mode switching controller 5 determines whether or not an access address by the processor P or on the bus 1 is included in the storage block within the working set. When the address is included in one of n storage blocks within the working set, the OR circuit 7 outputs "1", and the mode of the above cache basic controller becomes "update", and otherwise the OR circuit 7 outputs "0", and the mode of the cache basic controller 3 becomes "invalidate".

### 2. Operation

### (1) Operations of the mode switching controller

When observed for a very short time, a processor P frequently accesses a very limited memory space ( a limited number of storage blocks). This memory space is referred to as its "working set". WSM's detect the working set and register storage blocks belonging to it. WSM's determine whether or not an address accessed by the processor P or on the bus 1 is within the working set. When observed for a long time, the working set changes, and therefore unused storage blocks are deleted from WSM's.

The operations of the mode switching controller 5 are described in detail with reference to Figure 4.

The address tag as shown in Figure 4 keeps the address of a storage block within the working set. Assume here that the address space of the processor P is 2^{m} bytes, the space of a storage block in the working set is 2^{w} bytes. The address tag accordingly stores the upper (m-w) bits of the address. The valid flag 10 indicates whether or not WSM stores the address of an effective storage block as working set. Upon memory access request by the processor or on the bus 1, each WSM uses the comparator 11 to compare between the upper (m-w) bits of the access address and the contents in the address tag 9. When the upper address bits are coincident to the contents, and the bit of the valid flag is "1", the access is determined as made within the working set, and the OR circuit 7 outputs "1".

The registration of a storage block belonging to the working set is performed as follows. When the processor P issues a memory access request for an address which does not come within any storage block of the working set, the address is registered as an address of a new storage block of the working set. For this registration one WSM with the valid flag of "0" is used, and the upper (m-w) bits of the address is written into the address tag 9, and the valid flag 10 is changed into "1". If the valid flags 10 of all the WSM's keep "1", then no new entry is registered in the working set.

Next the deletion of a storage block from the working set is described. When a storage block registered as included in the working set becomes unused, the block is deleted from WSM. For this purpose the counter 8 in WSM is used, which is incremented each time the processor P issues a memory access request and cleared when the memory access request comes within the corresponding storage block in the working set. In other words, counter 8 indicates how many times the processor P accesses storage areas other than the corresponding storage block in the working set after it accessed the corresponding storage block last time. When the counter 8 overflows, the storage block in the working set is determined as no longer used, and "1" in the valid flag is cleared, and the storage block will be thereby deleted from the working set.

In this embodiment, the working set is registered in WSM's as described above. The following describes the dynamic optimization of protocols based on the output of the mode switching controller 5 ( the output of the OR circuit in Figure 4), and the control for read broadcasting.

### 2. Dynamic optimization of protocol control

Each cache C of Figure 1 snoops on the bus 1. The cache basic controller 3 detects a write operation to a data whose copy it has, on the bus, and then maintains the consistency among caches by invalidating its copy or updating its copy. When a write operation is performed for data whose copy the cache has mode switching controller 5 can determine whether or not the data is included in the working set. If the data is included in the working set of the cache basic controller 3, then it operates in the update mode. Otherwise it operates in the invalidate mode. The update mode is more efficient for data in the working set and, therefore, likely to be frequently used. The invalidate mode is more efficient for data out of the working set and, therefore, not likely to be frequently accessed. The protocols are accordingly switched based on whether or not a write operation is performed to shared data in the working set, and thereby the consistency among the caches is efficiently performed.

### 3. Control for ALL READ

When a cache miss occurs in a bus connected multiprocessor using conventional caches, individual processors use the bus 1 to read data into the caches from the memory 2. When each processor P sharing a lot of data progresses processing, each processor P individually uses the bus 1 to read the same data. In this case, the use ratio of the bus 1 could be reduced and the system performance improved if when a processor P reads data from the memory the data is transferred to the caches of other processors. This method is referred to here as "ALL_READ".

Since that method however purges out data stored in the caches of the other processors to store new data, the following point should be noted.

### i) Selection of processors participating broadcasting operations

Since all the processors connected through the bus 1 don't necessarily process each shared piece of data, a broadcasting operation should be performed only for processors which need transfer of the shared data.

### ii) Synchronization among processors P

Even if processors do process a shared piece of data, they are not necessarily synchronized with one another, and it is not therefore certain that when one processor P performs an ALL_READ operation another processor P needs that data. A broadcasting operation should be performed such that the data is transferred to dynamically selected processors, requiring the data.

Without taking the above points into the account, ALL_READ can purge out required data from the cache and degrade the system performance.

The embodiment of the invention enables ALL_READ operations to be performed efficiently by using a detection mechanism for the working set. When a processor P performs an ALL_READ operation, an ALL_READ request is placed on the bus 1. At the same time the mode switching controllers 5 of the other processors P check whether or not the address of the request comes within the storage blocks in their respective working sets. When the address comes within the respective working sets, the cache basic controllers 3 cause the data to be written into their data memories 4. Otherwise they do not cause the data to be written into their data memories 4. Since processors P which do not use broadcasted shared data do not write in the data , the problem (i) is resolved. In respect to the problem (ii), processors which do not use the data during broadcasting operation do not write in the data. In contrast, when a plurality of processors need the same large shared data block, an ALL_READ operation is performed as follows.
1. Each processor P uses the bus 1 to access the first part of shared data ( by a usual access). The working block including that part of shared data is registered as a working set for each processor.
2. Next, one of the processors reads the next part of the shared data using an ALL_READ operation. Since this data part is within the working set registered in the step 1, the other processor P reads in the data part.

In that way, while usual accesses are performed for the first data part, ALL_READ operations are performed for the following data parts within the working block, and thereby the bus traffic is reduced and the system performance is improved.

### 3. Effectiveness of the embodiment

In this embodiment, by using the dynamically optimized protocol control and ALL_READ control, bus traffic in a multiprocessor system is reduced and the system performance is improved. In the below the effectiveness of the embodiment is described with typical cases.

### 3.1) Effectiveness with dynamically optimized protocol control

### a. spin lock

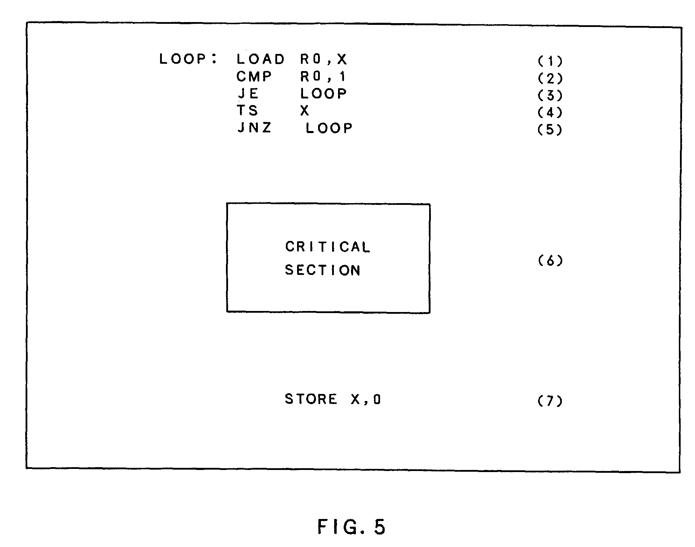

A spin lock technique is typical for exclusive control of a critical section in a multiprocessor. Figure 5 conceptually shows spin lock, wherein a processor P sets a predetermined shared variable to 1 when entering the critical section, and resets to 0 when exiting. A processor which is to enter the critical section checks the shared variable, and when it is 1, it waits for the variable to change to 0. The program shown in Figure 5 is as follows.
(1) Read the shared variable X.
(2) Compare the read X to 1.
(3) When the comparison result indicates X equal to 1, then jump to the loop.
(4) When X is 0 in the step (3), then check that X is 1, and set to 1. The instruction in the step (4) performs the comparison and set operation in combination.
(5) When X is not 1 in the step (4), then jump to the loop.
(6) Perform the critical section.
(7) Reset X to 0 finally.

Assume here that one processor P1 is performing the critical section and the other processors P2 to P10 are waiting for X to change to 0 to enter the critical section in a multiprocessor system having 10 processors tightly coupled (n in Figure 1 is 10). The caches operate as follows.

The processor p1 writes to X in the step (7). Since the other caches have a copy of X at this time, the cache control circuits operate to maintain the consistency among the caches. If the consistency is maintained in the invalidate mode, copies of X of the processors P2 to P10 are invalidated. These processors are performing the steps (1) to (3), and therefore they cause cache misses in the step (1), and read copies of X by using the bus. There are 10 instances of bus traffic caused, that is, one caused by the step (7) by the processor P1, and 9 instances caused by read misses in the step (1) by the processors P2 to P10. On the other hand, in the update mode, when the processor P1 performs a write operation in the step (7) copies of X held by the processors P2 to P10 are updated, which don't cause read misses in the step (1). As a result, the frequency of bus traffic in total is one which occurs in the step (7) by the processor P1.

According to the embodiment, while the processors P2 to P10 perform the loop of the steps (1) to (3), X is included in the working sets of the processors P2 to P10. Therefore when the processor P1 writes in X in the step (7), the mode switching controllers 5 of the processors P2 to P10 instruct the cache basic controllers 3 to maintain the consistency among the caches in the update type. As aforementioned the bus traffic in the whole is reduced and the system performance is improved as a result.

### b. Process migration

While the above is a case where the update mode is superior to the invalidate mode, there are inverse cases.

In a multiprocessor system, a program is executed in a multiprocessing environment. Usually there are more processes than the processors, and therefore processes are switched under predetermined conditions to be allocated to the processors. Giving attention to one process, it is allocated to a processor P, and thereafter interrupted by the control program, and further allocated again to a processor P at a later time and operation resumes. During the above operations, usually the processor to which the process is allocated the first time is different from the processor to which the process is next allocated. The phenomenon that a process is moved around different processors by the process switching is referred to as " process migration".

In the update mode, a processor places write data on the bus 1 during its write operation, and copies in the caches of the other processors are updated with the data. When there is a lot of shared data, the bus 1 is very frequently used. After process migration the involved process is executed on a different processor to the processor which previously executed the process. The cache of the latter processor however still keeps a copy of the data which the process used. The data which the process is using is shared by the former and latter processors. Such shared data is here referred to as " false shared data". Process migration accordingly causes false shared data, and when the update mode is used, it increases the use ratio of the bus 1, and thereby affects the system performance.

In contrast, when using caches of the invalidate type, process migration doesn't affect the system performance. Because when a process performs a write operation for false shared data, a copy of the false shared data in the cache of the processor on which the process was previously executed is invalidated, and it becomes non-shared data. For false shared data, write data is placed on the bus 1 once at the first time, but the bus 1 is not used later.

In this embodiment, the consistency among the caches is maintained in the update mode for data within the working set, and in the invalidate mode for data out of the working set. Further even when process migration occurs, the working set of the involved process is excluded from the working set memories of the cache C of the processor which previously executed the process, and thereby false shared data is manipulated in the invalidate mode.

In summary, some times the invalidate mode works better to maintain cache consistency, and other times the update mode does. In this embodiment, the protocols are switched to achieve better performance, and thereby the system performance is improved.

### 3.2) Effectiveness of ALL READ

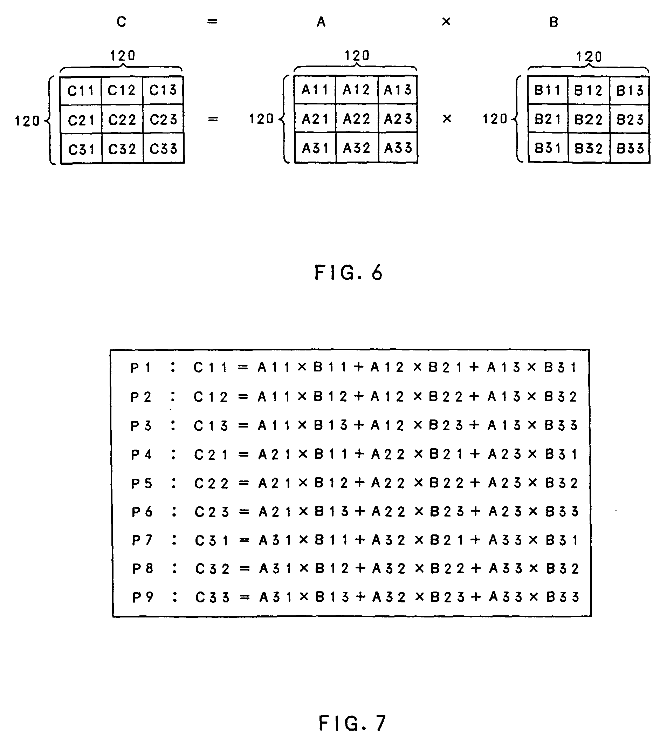

How ALL_READ works efficiently is illustrated with the multiplication of two dimensional matrices. As shown in Figure 6, the multiplication of two matrices each of 120 x 120 is performed by dividing each matrix into 9 partial matrices. As shown in Figure 7, each processor P1 to P9 performs each multiplication of partial matrices. Assume an element of each matrix has 32 bits (4 bytes) and 32 bits of data is transferred on the bus each time a transfer is made.

### i. Using usual protocol

Since each processor P performs multiplication of partial matrices three times as shown in Figure 7, it reads 6 partial matrices. Each partial matrix has 1,600 elements and one element is transferred each time a transfer is made. Each processor P accordingly requests 9,600 (=1,600x6) instances of bus transfer. Further 9 processors independently perform bus transfer, for the whole system 86,400 (=96,00x9) instances of bus transfer are needed.

### ii. Using ALL READ

As understood from the Figure 7, each partial matrix is accessed by 3 processors. By using ALL_READ, data piece within the working sets can be transferred to a plurality of caches with one transfer. Assume here that elements of a partial matrix are placed in a congruent memory area. When looking at A11 for example, it is referenced by 3 processors, P1, P2, and P3. These processors read the first element of A11 by independently using the bus. At this time the memory area where A11 is placed is registered as the working set of the processors. Therefore when one of the processors reads the second and the following elements of A11 by using the bus 1, it is read into the caches of the other two processors. In order for the three processors to read A11, 1,602 (=3x159) instances of bus transfer are required. The other 8 partial matrices are likewise transferred. In the whole, there are 14,418 bus transfers needed.

As described in the above, ALL_READ can reduces bus transfer frequency from 86,400 which is conventionally required, to 14,418.

### 4. Modifications of embodiment

Although the invention has been described in respect of the above embodiment, it will be readily understood that this invention should not be limited to the embodiment and various modifications can be made within the scope of the claims. The point is that the update mode is used for data having locality and the invalidate mode is used for data not having locality.

As has been described, this invention can provide a mechanism enabling dynamically and most favorably to switch between the protocols of the invalidate and update types. This mechanism can reduce traffic on the shared bus and improve the system performance. This invention can further provide cache control wherein the above mechanism is utilized with introduction of a new cache protocol to reduce traffics in the shared bus.

There has been described in a multiprocessor system having a plurality of processors each connected to a shared memory and a shared bus through a corresponding private cache, each private cache comprising:
storage means for storing shared data arranged in storage blocks, some of said storage blocks being a 'working set' for frequent access by said respective processor;
a controller to monitor signals on said shared bus and, when a piece of shared data is modified at one of the other private caches, to perform one of two data consistency procedures for said piece of shared data at its private cache, for resolving disaccord of said piece of shared data among said private caches, an improvement wherein each of said private caches further comprises:
   means for determining whether or not the address of a piece of shared data at its private cache corresponds to the address of a storage block belonging to the working set when a data consistency procedure is required for said piece of shared data; and,
   consistency maintenance means for performing one of said two data consistency maintenance procedures depending upon the result from said means for determining.
the determination means can comprise:
   means for storing addresses of a plurality of said storage blocks belonging to said working set; and,
   means for determining whether or not the address of the storage block to which the piece of shared data accessed by its processor belongs matches either of said addresses stored in said storing means.

When the corresponding processor to the private cache concerned accesses data in a storage block not belonging to the working set of the private cache concerned, said storage block can be caused to be added to said working set, and when the corresponding processor to the private cache concerned does not access data in a storage block belonging to said working set while said corresponding processor accesses data in one or more other storage blocks a predetermined number of times, said storage block can be caused to be deleted from said working set.

Said data consistency maintenance procedures can be of an invalidate type, the procedures of which type, when a shared data is modified at a private cache, change the status of said shared data piece at said private cache into an exclusive status and invalidate said shared data piece or pieces each at the other one or more private caches, and of an update type, the procedures of which type, when a shared data piece is modified at a private cache, update accordingly said shared data piece or pieces each at the other one or more private cache, if any, or change the status of said shared data piece at said private cache into an exclusive status if no other private cache has said shared data.

When said determination means determines that data under said data maintenance procedures is in a storage block belonging to said working set, said procedures of said update type are performed, and when said determination means determines that data under said data maintenance procedures is in a storage block not belonging to said working set, said procedures of said invalidate type are performed.

## Claims

1. Cache memory system (C1) for interconnecting a processor (P1) and a shared bus (Bus1) in a multiprocessor data processing system comprising a plurality of processors (P1-Pn) connected to the shared bus (Bus1) via similar cache memory systems (C1-Cn);
the cache memory system comprising:
- storage means (4) for storing shared data arranged in storage blocks; some of said storage blocks being a 'working set' for frequent access by said processor;
- a controller (3) for monitoring signals on the shared bus and, when a piece of shared data is modified in another cache memory system for performing one of two data consistency procedures for the piece of shared data;
characterised by:
- means for determining (5) whether or not the address of a piece of shared data stored in the storage means corresponds to the address of a storage block within the working set when a data consistency procedure is to be performed for the piece of shared data, the controller being responsive to the means for determining; and
said controller comprising means for performing one of the two data consistency procedures depending upon the result of the means for determining.

2. Cache memory system as claimed in claim 1 wherein the means for determining comprises:
- means for storing addresses (WSM, 9) of storage blocks belonging to the working set;
- means for determining (7) whether or not the address of the storage block to which the piece of shared data belongs and for which one of the two data consistency procedures is to be performed, matches any of the addresses stored in the address storage means (WSH, 9).

3. Cache memory system as claimed in claim 1 or claim 2, further comprising means for causing a storage block to be added to the working set, when the processor (P1) accesses data in this storage block; and
means for causing a given storage block to be deleted from the working set when the processor (P1) does not access data in this given storage block while the processor (P1) accesses data in other storage blocks a predetermined number of times.

4. Cache memory system as claimed in any preceding claim further comprising:
data consistency invalidate means for changing the status of the shared piece of data to an exclusive status and causing the shared piece of data stored in the storage means of other cache memory systems in the multiprocessor data processing system to be invalidated when a piece of shared data is modified in the storage means (4), and a data consistency update means for causing the piece of shared data in the storage means of other cache memory systems in the multiprocessor data processing system to be updated accordingly and, if no other cache memory system has the piece of shared data stored therein, for changing its status to an exclusive status when a piece of shared data is modified.

5. Cache memory system as claimed in Claim 4 further comprising means for performing the data consistency procedure of an invalidate type on determination that the piece of shared data does not belong to the working set and means for performing a data consistency procedure of an update type on determination that the piece of shared data does belong to the working set.

6. A multiprocessor data processing system comprising a plurality of processors (P1-Pn);
a shared bus (BUS1) and a plurality of cache memory systems (C1-Cn) as claimed in any preceding claim, each processor being connected to the shared bus via one of the cache memory systems (C1-Cn).

7. A multiprocessor system comprising a plurality of processors (P1-Pn) each connected to a shared memory (2) and a shared bus (BUS1) through a corresponding private cache (C1-Cn), each private cache (C1-Cn) comprising:
storage means for storing shared data arranged in storage blocks, some of said storage blocks being a 'working set' for frequent access by said respective processor;
a controller (3) to monitor signals on said shared bus and, when a piece of shared data is modified at one of the other private caches, to perform one of two data consistency procedures for said piece of shared data at its private cache, for resolving disaccord of said piece of shared data between the private caches;
characterized by each of said private cache further comprising:
means for determining (5) whether or not the address of a piece of shared data at its private cache corresponds to the address of a storage block within the working set when a data consistency procedure is required for said piece of shared data; and
consistency maintenance means for performing one of said two data consistency maintenance procedures depending upon the result from said means for determining.

## Patentansprüche

1. Cache-Speicheranordnung (C1), um einen Rechner (P1) und einen gemeinsamen Bus (Bus1) in einem Mehrrechner-Datenverarbeitungssystem miteinander zu verbinden, wobei das System eine Vielzahl von Rechnern (P1-Pn) enthält, die über ähnliche Cache-Speicheranordnungen (C1-Cn) mit dem gemeinsamen Bus (Bus1) verbunden sind;
wobei die Cache-Speicheranordnung enthält:
- Speichermittel (4), um die gemeinsamen Daten, die in Speicherblöcken angeordnet sind, zu speichern; einige der Speicherblöcke ein 'Working Set' für häufigen Zugriff durch den Rechner bieten;
- eine Steuerung (3), um die Signale im gemeinsamen Bus zu überwachen, und, wenn ein gemeinsamer Datenteil in einer anderen Cache-Speicheranordnung geändert wird, eine von zwei Datenkonsistenzprozeduren für den gemeinsamen Datenteil durchzuführen;
gekennzeichnet durch:
- Mittel, um zu bestimmen (5), ob die Adresse eines gemeinsamen Datenteils, der in den Speichermitteln gespeichert ist, der Adresse eines Speicherblocks in dem Working Set entspricht oder nicht, wenn eine Datenkonsistenzprozedur für den gemeinsamen Datenteil durchgeführt werden muß, wobei die Steuerung auf die Mittel zur Bestimmung reagiert;
und die Steuerung Mittel enthält, um eine der beiden Datenkonsistenzprozeduren in Abhängigkeit des Ergebnisses durchzuführen, das durch die Mittel zur Bestimmung erzielt wurde.

2. Cache-Speicheranordnung gemäß Anspruch 1, wobei die Mittel zur Bestimmung enthalten:
- Mittel, um die Adressen (WSM, 9) der Speicherblöcke zu speichern, die zu dem Working Set gehören;
- Mittel, um zu bestimmen (7), ob die Adresse des Speicherblocks, zu dem der gemeinsame Datenteil gehört, für den eine der beiden Datenkonsistenzprozeduren durchzuführen ist, zu einer der Adressen paßt oder nicht, die in den Adreßspeichermitteln (WSH,9) gespeichert sind.

3. Cache-Speicheranordnung gemäß Anspruch 1 oder Anspruch 2, die außerdem Mittel enthält, um zu veranlassen, daß ein Speicherblock in das Working Set eingefügt wird, wenn der Rechner (P1) auf Daten in diesem Speicherblock zugreift; und
Mittel, um zu veranlassen, daß ein bestimmter Speicherblock aus dem Working Set gelöscht wird, wenn der Rechner (P1) nicht auf Daten in diesem bestimmten Speicherblock zugreift, während der Rechner (P1) auf Daten in anderen Speicherblöcken entsprechend einer zuvor bestimmten Häufigkeit zugreift.

4. Cache-Speicheranordnung gemäß einem vorhergehenden Anspruch, die außerdem enthält:
Datenkonsistenz-Annullierungsmittel, um den Status des gemeinsamen Datenteils in einen exklusiven Status zu ändern und zu veranlassen, daß der gemeinsame Datenteil, der in den Speichermitteln der anderen Cache-Speicheranordnungen in dem Mehrrechner-Datenverarbeitungssystem gespeichert ist, annulliert wird, wenn ein gemeinsamer Datenteil in den Speichermitteln (4) annulliert wird, und ein Datenkonsistenz-Aktualisierungsmittel, um zu veranlassen, daß der gemeinsame Datenteil in den Speichermitteln der anderen Cache-Speicheranordnungen in dem Mehrrechner-Datenverarbeitungssystem entsprechend aktualisiert wird, und wenn keine andere Cache-Speicheranordnung den gemeinsamen Datenteil gespeichert hat, deren Status in einen exklusiven Status zu ändern, wenn ein gemeinsamer Datenteil geändert wird.

5. Cache-Speicheranordnung gemäß Anspruch 4, die außerdem Mittel enthält, um die Datenkonsistenzprozedur in Form einer Annullierung auszuführen, wenn bestimmt wird, daß der gemeinsame Datenteil nicht zu dem Working Set gehört, und Mittel, um eine Datenkonsistenzprozedur in Form einer Aktualisierung durchzuführen, wenn bestimmt wird, daß der gemeinsame Datenteil zu dem Working Set gehört.

6. Ein Mehrrechner-Datenverarbeitungssystem mit einer Vielzahl von Rechnern (P1-Pn);
einem gemeinsamen Bus (BUS1) und einer Vielzahl von Cache-Speicheranordnungen (C1-Cn) gemäß einem vorhergehenden Anspruch, wobei jeder Rechner über eine Cache-Speicheranordnung (C1-Cn) mit dem gemeinsamen Bus verbunden ist.

7. Ein Mehrrechner-Datenverarbeitungssystem, das eine Vielzahl von Rechnern (P1-Pn) hat, von denen jeder über einen entsprechenden privaten Cache (C1-Cn) mit einem gemeinsamen Speicher (2) und einem gemeinsamen Bus (BUS1) verbunden ist,
mit
Speichermitteln, um die gemeinsamen Daten, die in Speicherblöcken angeordnet sind, zu speichern, wobei einige der Speicherblöcke einen 'Working Set' für den häufigen Zugriff durch den jeweiligen Rechner darstellt;
einer Steuerung (3), um Signale in dem gemeinsamen Bus zu überwachen, und, wenn ein gemeinsamer Datenteil in einem der anderen privaten Caches geändert wird, eine der beiden Arten des Datenkonsistenzverfahrens für den gemeinsamen Datenteil in seinem privaten Cache auszuführen, um Unstimmigkeiten bei dem gemeinsamen Datenteil zwischen den privaten Caches zu beheben;
dadurch gekennzeichnet, daß der private Cache außerdem enthält:
Mittel, um zu bestimmen (5), ob die Adresse eines gemeinsamen Datenteils in seinem privaten Cache der Adresse eines Speicherblocks in dem Working Set entspricht oder nicht, wenn eine Datenkonsistenzprozedur für den gemeinsamen Datenteil durchgeführt werden muß; und
Konsistenzerhaltungsmittel, um eines der beiden Datenkonsistenzerhaltungsverfahren auszuführen, was von dem Ergebnis abhängt, das von den Bestimmungsmitteln erzielt wird.

## Revendications

1. Système d'antémémoire (C1) pour interconnecter un processeur (P1) et un bus partagé (Bus1) dans un système de traitement de données multiprocesseur comprenant une pluralité de processeurs (P1 à Pn) reliés au bus partagé (Bus1) via des systèmes d'antémémoire similaires (C1 à Cn) ;
le système d'antémémoire comprenant :
- un moyen de mémorisation (4) pour mémoriser les données partagées disposées en blocs de mémorisation ; certains desdits blocs de mémorisation étant un "ensemble de travail" pour accès fréquents par ledit processeur ;
- un contrôleur (3) pour surveiller les signaux sur le bus partagé et, lorsqu'un ensemble de données partagées est modifié dans un autre système d'antémémoire, pour effectuer une procédure de cohérence de données parmi deux procédures de cohérence de données pour l'ensemble de données partagées ;
caractérisé par :
- un moyen pour déterminer (5) si oui ou non l'adresse de l'ensemble de données partagées mémorisée dans le moyen de mémorisation correspond à l'adresse du bloc de mémorisation à l'intérieur de l'ensemble de travail lorsqu'une procédure de cohérence de données doit être effectuée pour l'ensemble de données partagées, le contrôleur étant sensible au moyen de détermination et
ledit contrôleur comprenant un moyen pour effectuer l'une des deux procédures de cohérence de données en fonction du résultat du moyen de détermination.

2. Système d'antémémoire selon la revendication 1, dans lequel ledit moyen de détermination comprend :
- un moyen pour mémoriser des adresses (WSM, 9) des blocs de mémorisation appartenant à l'ensemble de travail ;
- un moyen pour déterminer (7) si oui ou non l'adresse du bloc de mémorisation auquel l'ensemble de données partagées appartient pour lesquelles l'une des deux procédures de cohérence de données doit être effectuée correspond à l'une quelconque des adresses mémorisées dans le moyen de mémorisation d'adresse (WSH, 9).

3. Système d'antémémoire selon la revendication 1 ou la revendication 2, comprenant de plus un moyen pour amener un bloc de mémorisation à être ajouté à l'ensemble de travail, lorsque le processeur (P1) accède aux données dans ce bloc de mémorisation ; et un moyen pour amener un bloc de mémorisation donné à être supprimé de l'ensemble de travail lorsque le processeur (P1) n'accède pas aux données dans ce bloc de mémorisation donné tandis que le processeur (P1) accède aux données dans d'autres blocs de mémorisation un nombre prédéterminé de fois.

4. Système d'antémémoire selon l'une quelconque des revendications précédentes comprenant de plus :
un moyen d'invalidation de cohérence de données pour changer l'état de l'ensemble partagé de données à un état exclusif et pour amener l'ensemble partagé de données mémorisé dans le moyen de mémorisation des autres systèmes d'antémémoire dans le système de traitement de données multiprocesseur à être invalidé lorsqu'un ensemble de données partagées est modifié dans le moyen de mémorisation (4) et un moyen de mise à jour de cohérence de données pour amener l'ensemble de données partagées dans le moyen de mémorisation des autres systèmes d'antémémoire dans le système de traitement de données multiprocesseur à être mis à jour en conséquence et, si aucun autre système d'antémémoire n'a l'ensemble de données partagées mémorisé dans celui-ci, pour changer son état en un état exclusif lorsqu'un ensemble de données partagées est modifié.

5. Système d'antémémoire selon la revendication 4, comprenant de plus un moyen pour effectuer la procédure de cohérence de données d'un type invalide sur détermination que l'ensemble de données partagées n'appartient pas à l'ensemble de travail et un moyen pour effectuer une procédure de cohérence de données du type mis à jour sur détermination que l'ensemble de données partagées appartient à l'ensemble de travail.

6. Système de traitement de données multiprocesseur comprenant une pluralité de processeurs (P1 à Pn) ;
un bus partagé (BUS1) et une pluralité de systèmes d'antémémoire (C1 à Cn) selon l'une quelconque des revendications précédentes, chaque processeur étant relié au bus partagé via un des systèmes d'antémémoire (C1 à Cn).

7. Système multiprocesseur comprenant une pluralité de processeurs (C1 à Cn) chacun relié à une mémoire partagée (2) et à un bus partagé (BUS1) par l'intermédiaire d'une antémémoire privée correspondante (C1 à Cn), chaque antémémoire privée (C1 à Cn) comprenant :
un moyen de mémorisation pour mémoriser les données partagées disposées en blocs de mémorisation, certains desdits blocs de mémorisation étant un "ensemble de travail" pour accès fréquents par ledit processeur respectif ;
un contrôleur (3) pour surveiller les signaux sur ledit bus partagé et, lorsqu'un ensemble de données partagées est modifié au niveau d'une des autres antémémoires privées, pour effectuer une des deux procédures de cohérence de données pour ledit ensemble de données partagées au niveau de son antémémoire privée pour résoudre le désaccord dudit ensemble de données partagées entre les antémémoires privées ;
caractérisé en ce que chaque antémémoire privée comprend de plus :
un moyen pour déterminer (5) si oui ou non l'adresse d'un ensemble de données partagées au niveau de son antémémoire privée correspond à l'adresse d'un bloc de mémorisation à l'intérieur de l'ensemble de travail lorsqu'une procédure de cohérence de données est requise pour ledit ensemble de données partagées ; et
un moyen de maintenance de cohérence pour effectuer une desdites deux procédures de maintenance de cohérence de données en fonction du résultat dudit moyen de détermination.
